# EUROPEAN PATENT APPLICATION

(11) **EP 3 626 372 A1**
(43) Date of publication of application: **25.03.2020**
(21) Application number: 18196398.4
(22) Date of filing: 24.09.2018
(51) Int. Cl.: B23B 51/00, B23B 51/02, B23B 51/06, B23C 5/10, B22F 3/03, B23D 77/00, B23P 15/32, B22F 5/00

(54) **VARIABLE CORE DIAMETER CUTTING TOOL AND METHOD FOR PRODUCING THE SAME**

(71) Applicant: Lamina Technologies SA, 1400 Yverdon-les-Bains (CH)
(72) Inventor: EDO, Salvador Meijueiro, 1170 Aubonne (CH)
(74) Representative: Omnis-IP

(57) **Abstract**

The present invention concerns a pressed cutting tool comprising a variable core diameter, a mold and a method for producing the cutting tool by pressing. Said cutting tool preferably comprises a shaft and a part comprising one or more helical flutes, wherein low points or lines in said flutes define the shape of said core. In a preferred embodiment, said core is conical. In a preferred embodiment, said cutting tool is an end mill and/or a drill.

## Description

### Technical Field

The present invention relates to cutting tools and methods for producing the same, in particular a method for producing a cutting tool by pressing. The invention relates to a cutting tool comprising a core diameter, wherein said core diameter is variable along the axis of the cutting tool.

### Background Art and Problems Solved by the Invention

Cutting tools such as end mills are typically manufactured by feeding a granulated material, such as a metal and/or carbide powder, into an extruder for pressing and extruding rods, hydrogen de-waxing, sintering, cutting, centerless grinding, flute grinding and coating. Different steps may be conducted by different manufacturers. The step-of dewaxing is typically conducted in a hydrogen furnace, and sintering in an HIP (hot isostatic pressing) furnace. In some cases, the flutes are subjected to honing before cleaning and coating.

The cutting edges or flutes of the cutting tool are formed in the step of grinding the rod so as to obtain desired shape of flutes.

Only few manufacturers have the equipment for producing so-called blanks, which are extruded carbide rods that are already cut to correct length and centerless ground to correct the diameter. Small and mid-sized companies may buy the blanks, conduct the grinding process and coating. This may be conducted by way of a flute grinding machine, which will grind the flutes so as to obtain a specific geometry.

The above way of producing in particular round cutting tools suffers from several disadvantages and limitations. The step of grinding the flutes into the extruded rod or blank results in high amounts of waste material, since a lot of material is cut away from the extruded rod when cutting the flutes or other cutting edges of the cutting tool. In other words, a lot of the starting material is lost due to grinding the flutes into the cutting tool. While it is possible to filter and re-use scrap carbide, it would be advantageous to reduce the amount of the waste material during grinding.

JP H08 260006 published in 1996 discloses an apparatus and method for producing a drill by pressing. It is interesting to note that today, there are no pressed cutting tools in the market, which implies that the concept disclosed in this reference did not provide any advantage compared to the current process outlined above, based on extruding rods and grinding the helical flutes of the tools thereafter. One may speculate the reasons for the lack of success of the concept, but it may be related to the problem that a large number of pressed tools may break apart during the extraction of the tool from the mold.

US 2016/0229082 and US 2012/0003443 also relate to processes for pressing cutting tools.

In the yet unpublished European patent application EP17192714.8 filed on September 22, 2017, and yet unpublished international application PCT/EP2018/075709, filed on September 21, 2018, which are entirely incorporated herein by reference, the applicant discloses a process and apparatus for producing a cutting tool, a blank tool and/or a precursor cutting tool. This document discloses an apparatus comprising two mold units, which are combined to form the mold of the cutting tool. One of the mold unit comprises ridges forming the negative of the helical flutes of the cutting tool, and the other mold unit comprises an essentially hollow cylindrical portion for providing the negative of the shaft portion of the tool.

The present invention aims at further improving processes of producing cutting tools by pressing. More specifically, it is an objective of facilitation the extraction of pressed cutting tools from their molds after pressing. It is an objective to reduce the occurrence of breakage of the pressed cutting tool during extraction.

### Summary of the Invention

Remarkably, the present inventors have provided a process for producing products by pressing, for example by mold-pressing. The products are preferably selected from the group consisting of: cutting tools, blank cutting tools and/or precursor cutting tools, in particular the cutting tools mentioned elsewhere in this specification.

In an aspect, the invention provides a product selected from cutting tools, blank cutting tools and/or precursor cutting tools comprising an overall longitudinal form and comprising: a first free end and a second free end, a first section encompassing said first free end, wherein said first section comprises one or more flutes, and, a second section encompassing said second free end, wherein said second section comprises the shank of the product, wherein said flutes extend along a spiral or helix from said first free end to an exit curve, where said flutes end.

In an aspect, the invention provides a pressed product selected from cutting tools, blank cutting tools and/or precursor cutting tools comprising a variable core diameter.

In an aspect, the invention provides a pressed product selected from cutting tools, blank cutting tools and/or precursor cutting tools comprising a conical core and/or a core comprising a conical section.

In an aspect, the invention provides a process for manufacturing a product selected from the group consisting of a cutting tool, a blank cutting tool and a precursor cutting tool by pressing, the process comprising: providing at least one mold defining the shape of at least part of said product, wherein said mold comprises a mold area and/or cavity comprising ridges designed to define one or more flutes and a core of the product to be produced, adding a powder comprising a carbide, ceramic, metal, nitride or cermet powder into said mold, exerting a pressure on said powder, thereby producing said product, characterized in that said core is defined by said mold so as to have a variable core diameter.

In an aspect, the invention provides a pressed product obtainable by the process of the invention.

In an aspect, the invention provides a pressed product selected from the group consisting of: cutting tool, a blank tool and/or a precursor cutting tool, wherein said product comprises a shaft and a cut comprising flutes, wherein said flutes define a core, characterized in that said core has a variable diameter.

In an aspect, the invention provides a mold for producing at least part of a product selected from the group consisting of: cutting tool, a blank tool and/or a precursor cutting tool, wherein the mold comprises ridges designed to define flutes and a core of the tool to be produced, wherein said core has a variable diameter.

In an embodiment, a diameter of said core is variable along a longitudinal axis of said product, in particular along a longitudinal axis of said first section and/or cut of said product.

In an embodiment, said diameter of said core corresponds to twice the distance of a perpendicular extending radially from a central, longitudinal axis of the product and/or of said mold to a gullet or bottom low point or line.

In an embodiment of the process of the invention, said product comprises: a first free end and a second free end, a first section encompassing said first free end, wherein said first section comprises said one or more flutes, and, a second section encompassing said second free end, wherein said second section comprises a shank of the product, wherein, when said first section of said product is seen in cross section, a distance from a circular outline of a first section of the cutting tool to the said gullet or bottom low point or line decreases from said first free end in direction towards said shank. This applies in particular along the longitudinal axis of said first section.

In an embodiment, an angle (α) between the longitudinal axis of said product and/or said mold and a longitudinal straight line defining said core diameter is from 0.05 to 6°, preferably 0.1 to 3°, most preferably from 0.5 to 2°.

In an embodiment, said longitudinal straight line is a line extending in a same longitudinal plane as said longitudinal axis.

In an embodiment, when said product is seen in a longitudinal section, said longitudinal straight line connects successive gullets and/or low points of said one or more flutes appearing in said longitudinal section, and/or, with respect to said mold, said longitudinal straight line connects successive peaks of said ridges of said mold.

In an embodiment, the process of the invention comprises: extracting said product from said mold by applying a pressure or force axially on said product in a direction from a first free end towards the shank of said product.

In an embodiment, said mold comprises first and second openings in communication with said mold area or cavity, and the process comprises: providing a pressing punch, wherein said pressing punch is capable of rotating and/or comprises a rotating head, and, axially inserting said pressing punch through said second opening of said mold and into said mold area comprising ridges and extracting said product through said first opening.

In an embodiment, said at least one mold is a first mold and said mold area and/or cavity is a first mold area and/or cavity, and wherein said process comprises: providing a second mold comprising a second mold area and/or cavity, wherein said second mold area is designed to define a shank of the product to be produced, wherein said first mold comprises first and second openings, and wherein said second mold comprises first and second openings, and wherein said process comprises, before adding said powder, joining first openings of said first and second molds so as to provide an overall mold for said product.

In an embodiment, said core is defined by the low point and/or gulet of said flutes, and wherein said core comprises a cone and/or a conical section.

Further aspects and preferred embodiments of the invention are defined herein below and in the appended claims.

Further features and advantages of the invention will become apparent to the skilled person from the description of the preferred embodiments given below.

### Brief Description of the Drawings

**Figures 1A** and **1B** show a perspective view and a longitudinal section, respectively, of cutting tools according to an embodiment of the invention.
**Figures 2A, 2B** and **2C** show first and second molds for pressing cutting tools (Fig. 2A) and illustrate the process of pressing said cutting tools (Figs 2B and 2C) in accordance with the invention.
**Figures 3A** and **3B** are top down views on the extremity of a cutting tool in accordance with an embodiment of the invention, in which dotted lines have been added for illustration.
**Figures 4A** is a longitudinal section through an assembly for producing products in accordance with an embodiment of the invention.
**Figures 4B** is an enlarged extract of the longitudinal section of Figure 4A, in which the mold cavity or area of a mold in accordance with the invention is shown in more detail.
**Figures 5A** and **5B** are longitudinal sections of an assembly for illustrating the extraction of the cutting tool from the molds in accordance with an embodiment of the process of the invention.
**Figures 6A** and **6B** are enlarged extracts G and H of Figure 4B.

### Detailed Description of the Preferred Embodiments

The following description of the preferred embodiments is merely exemplary in nature and is in no way intended to limit the scope of the invention, its application or uses.

For the purpose of the present specification, the term "comprising" and its various grammatical forms are intended to mean "includes, amongst others". It is not intended to mean "consists only of".

The present invention relates to manufacturing products selected from cutting tools, blank cutting tools and/or precursor cutting tools by pressing and to the products obtainable by the process of the invention. The invention also relates to molds for producing said products by pressing.

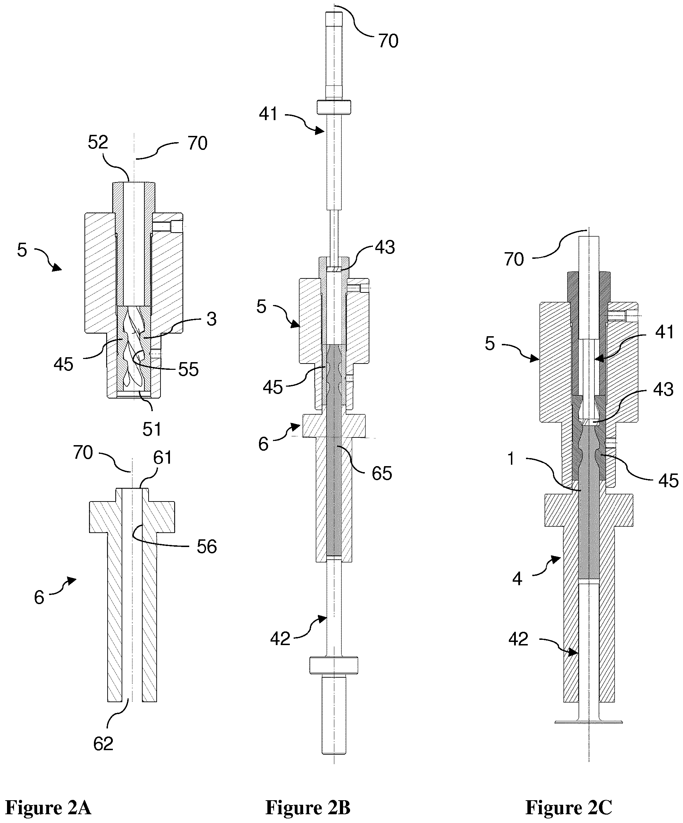

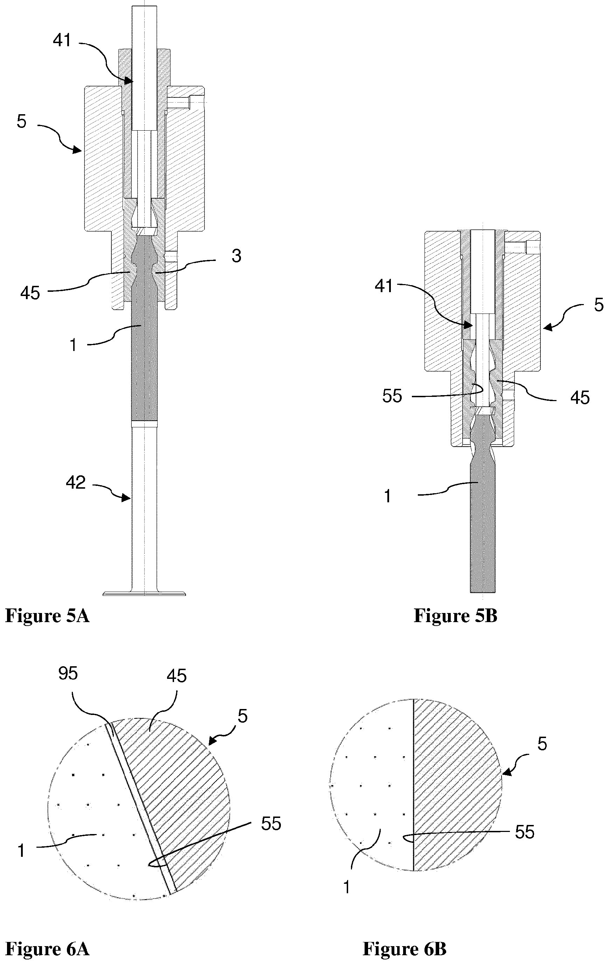

JP H08 260006 discloses an apparatus for producing a drill by pressing. Furthermore, the applicant of the present application has developed a process for manufacturing cutting tools, blank tools and/or precursor cutting tools by pressing, which process is disclosed in yet unpublished European application EP17192714.8 filed on September 22, 2017, which is entirely incorporated herein by reference. The present invention may be used with the apparatus disclosed in said yet unpublished application, which is why some elements of that application are summarized below with respect to Figures 2A-2C and 5A and 5B.

For the purpose of the present specification, the expressions "product", "cutting tool" and "tool" are intended to encompass cutting tools, blank cutting tools and/or precursor cutting tools. The final cutting tool ready for use may be obtained from the product of the present specification by one or more additional treatments, such as hydrogen de-waxing, sintering, cutting, centerless grinding, flute grinding, honing, cleaning and coating. These known treatments are not described in detail in the present specification, but are also encompassed as optional further or complementary process steps or treatments of the invention. For the purpose of the present specification, the "cutting tool" or "product" is the product obtainable by the process disclosed in this specification, optionally further processed so as to be ready for commercialization.

In an embodiment, the product is a product comprising a helix and/or helical flutes, or a precursor or blank of such a product.

In accordance with an embodiment, the product is a solid cutting tool, blank solid cutting tool and/or precursor solid cutting tool.

In accordance with an embodiment, the product is a solid round tool, blank solid round tool and/or precursor solid round tool. In an embodiment, the product is selected from an end mill, a milling cutter, a drill bit, a tap, and a reamer, or precursors and/or blanks of the aforementioned.

In an embodiment, the product is an end mill, blank end mill or precursor end mill, more preferably a solid end mill, solid blank end mill or solid precursor end mill. The cutting tool may be a milling cutter and/or blank milling cutter. In an embodiment, the cutting tool may be a drill bit, for example a blank drill bit and/or precursor drill bit. In an embodiment, the product is a tap, for example a blank tap and/or precursor tap. In an embodiment, the product is a reamer, for example a blank reamer and/or precursor reamer.

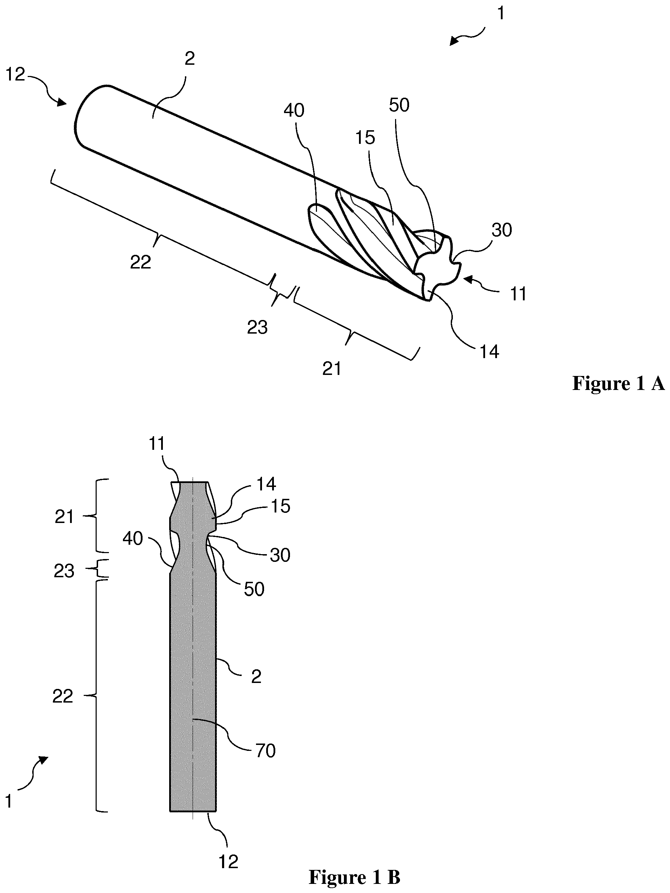

**Figures 1A** and **1B** show cutting tools 1 in accordance with an embodiment of the invention. The cutting tool 1 has an overall essentially rod-like form. Due to its longitudinal, rod-like form, the cutting tool 1 has first and second opposed extremities 11, 12, corresponding to the top and bottom ends of the tool 1 as shown in Fig. 2B. Furthermore, the cutting tool preferably comprises several parts or sections along the longitudinal axis 70 of the tool, in particular at least two sections 21 and 22, which cover at least the first and second extremities of the cutting tool.

The first rod section 21 preferably encompasses at least a first extremity 11 of the cutting tool. The first rod section 21 preferably comprises and/or consists of the cut of the cutting tool comprising a flute or a plurality of flutes 30 and a tooth or a plurality of teeth 14, respectively. Preferably, said flutes are spiraled, helicoidal and/or helical flutes. The geometry of the one or more flutes 30 define the one or more teeth 14 of the cutting part 4 of the cutting tool, and vice versa.

The flutes 30 and/or teeth 14 preferably determine geometry of the cutting part or cut of the tool and therefore generally contribute to defining at least part of the cutting properties of the cutting tool. The flutes and teeth at the first section 21 allow the cutting and/or milling of an appropriate material by the rotating cutting tool 1.

The deepest point or line of the flutes 30 is known as the gulet or fillet 50. The core diameter of the cut and/or first section 21 is generally defined by the gulet, and vice versa.

The cutting tool 1 as shown comprises two pairs of teeth, wherein a pair of opposed teeth have identical geometry, and whereas an individual tooth is provided between two teeth having a different geometry. As can be seen in Figure 1, neighboring teeth have different land widths.

In a preferred embodiment, the width of the land 15 of one or more teeth 14 of the cutting tool 1 increases in the direction from the first extremity 11 towards the shank 2. The increasing land width may but need not be a consequence of the variable (increasing) core diameter of the cutting tool.

In the embodiments shown, the outer edge or land 15 of the teeth 14 lies on or in a cylinder surface, which cylinder defines the diameter of the cut (the cutting diameter). In the embodiment show, it is the surface (or prolongation) of the same cylinder that is defined by the cylindrical shank 2. As shown, the cutting tool 1 lacks any primary relief (relief adjacent to the cutting edge).

The second rod section 22 preferably encompasses at least a second extremity 12 of the cutting tool. The second rod section 22 preferably defines or comprises the shank 2 of the cutting tool. The two extremities 11, 12 are preferably present at two opposed sides of the cutting tool. When the cutting tool is used, it is preferably placed in a cutting tool holder at the shank 2 and caused to rotate.

The cutting tool 1 preferably comprises a third section 23, which is situated longitudinally preferably between the shank 2 and the cut. The third section 23 is where the flutes 30 exit along an exit curve 40 from the cut towards the outer surface of the shank. The third section 23 is preferably a transitional section. The third section does preferably not form part of the cut nor of the shank and is also referred to as the run-out.

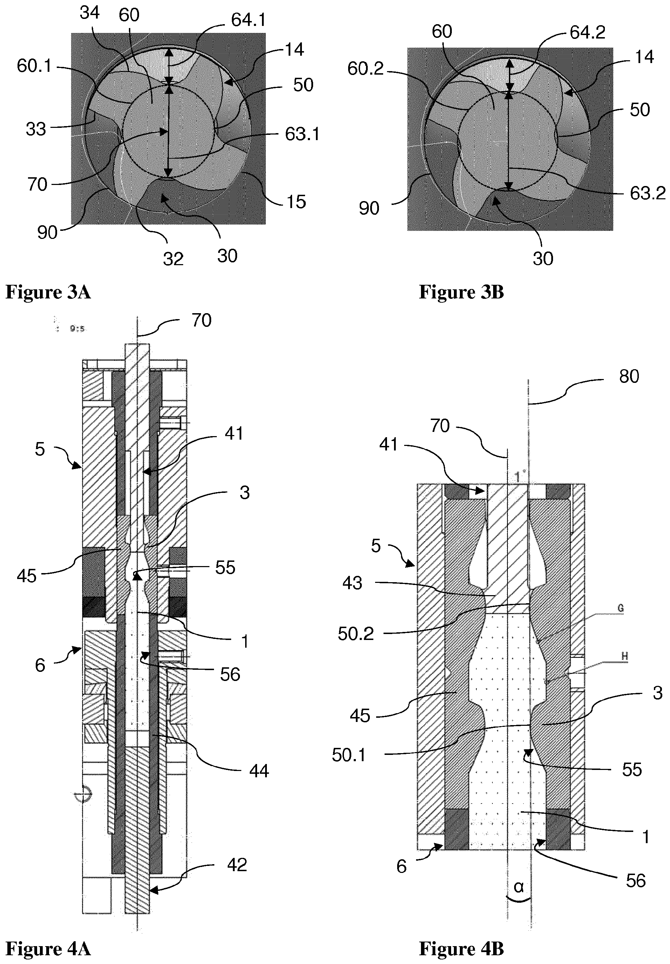

**Figures 2A, 2B** and **2C** illustrate the process of pressing cutting tools in accordance with an embodiment of the invention. These figures as well as Figures 5A and 5B are taken from the application EP17192714.8 mentioned above. In these figures, the molds shown are slightly different from the molds used for the purpose of the present invention, as will become apparent from the description of Figs 3A-4B further below. However, Figures 2A-2C and 5A-5B are used in this description to illustrate steps or processes suitable to produce cutting in accordance with the present invention.

Figure 2A shows first and second molds or mold parts 5, 6. Each mold comprises an inner mold lumen, the first mold comprising a first mold area or cavity 55 and the second mold comprising a second mold area or cavity 56. The mold cavities 55, 56 each have an axis 70 corresponding to the axis of the tool to be obtained.

The cavity 55 of the first mold 5 comprises one or more ridges 3, defining the flutes and/or teeth of the cutting tool to be produced. As the cavity or area 5 acts preferably as the negative of the first section (and generally third section 23), features concerning said first section of the tool are present in the negative in said mold area 55.

Furthermore, each mold comprises two opposed openings, the first mold 5 comprising first and second openings 51, 52, the second mold 6 comprising first and second opposed openings 61, 62. The openings provide access to mold areas of the respective mold or mold part.

In Figure 2B, the two molds 5, 6 are joined at their respective first openings 51, 61, thereby providing the mold of the cutting tool to be obtained. The two mold parts are preferably joined coaxially, defining a complete mold having axis 70.

Further in Figure 2B, a second pressing punch 42 has been approached coaxially so as to close the second opening 62 of the second mold 6. Furthermore, with the second opening 62 being closed, a powder 65 has been filled from the second opening 52 of the first mold 5 into the overall mold. A first pressing punch 41 comprising a rotatable heat 43 has already been inserted through the second opening 52 of the first mold 5.

The first pressing punch 41 is preferably rotatable and/or comprises a rotatable head 43. Preferably, the head 43 of the punch 41 comprises cut-outs or grooves allowing the head to enter the first mold 5 comprising one or more ridges 3. The head 43 of the first punch may enter the first mold cavity 55 while rotating, following the ridges of the mold cavity.

The method of the invention preferably comprises obtaining a cutting tool 1 by pressing the powder provided in the one or more molds 5, 6. In the embodiment shown, the pressing is conducted by one or more pressing punches 41, 42.

In particular, said first and second pressing punches 41, 42 move coaxially so as to compress the powder provided in the molds 5, 6. The two pressing punches 41, 42 preferably approach each other coaxially, thereby exerting pressure on the powder 65 provided in the molds 5, 6.

Pressing may be performed in various ways. In an embodiment, the two pressing punches 41, 42 approach simultaneously and thus apply pressure actively simultaneously. In another embodiment, one of the two punches is blocked while the other punch approaches and compacts the powder. In this case, the blocked punch exerts pressure passively by opposing the force exerted by the moving punch on the powder. Accordingly, in a preferred embodiment, the pressing punches 41, 42 move sequentially when exerting pressure on the powder. In a typical sequence of applying pressure, the second pressing punch 42 remains blocked at a particular longitudinal position, while the first punch 41 moves axially so as to compress the powder 65, here by moving top-down along axis 70. In a subsequent step, the first punch 41 is blocked and the second punch 42 moves axially so as to compress the powder 65, here by moving bottom-up along axis 70.

In an embodiment, the powder is exposed to ultrasound during filling the molds 5, 6 with powder and/or during pressing of the powder. For example, during filing the powder 65, the powder may be exposed to ultrasound. Accordingly, the apparatus comprising the molds and pressing punches preferably comprises an ultrasound generator. Preferably, the ultrasound generator is arranged so as to effectively transfer ultrasound waves to the powder in the molds. For example, the ultrasound generator in contact with at least one or both of the molds. In a preferred embodiment, the powder is exposed to ultrasound during pressing.

Figure 2C shows the two punches 41, 42 in their axially approached position, comprising the cutting tool 1 obtained by pressing. From the position shown in Fig. 2C, the cutting tool 1 needs to be extracted as will be described further below. First, certain preferred features of the mold 5 and the flutes defined by the mold will be described in more detail herein after.

**Figures 3A** and **3B** are views from above onto the first extremity 11 of a vertically placed cutting tool 1 as shown in Fig. 1B. The first extremity of the tool is seen from above in these figures. The cut of the tool shown comprises four teeth 14, with the flutes 30 between each pair of teeth. The flutes can be seen as spiral-like cut-outs or grooves in the overall cylinder of the cutting tool. In the embodiment shown, each tooth 14 comprises a cutting edge 32, a rake 33, a heel 34, and a land 15.

As has been described above, the land 15 of all teeth 14 lies on or in a cylinder surface that defines the diameter of the cut (the cutting diameter), which in the embodiment shown is the same cylinder that is defined by the cylindrical shank or shaft 2. It is noted that the product as shown in Figures 1A, 1B, 3A and 3B may be subjected to further treatments so as to adjust the rake angle and/or creating primary and/or secondary reliefs.

The dotted line 60.1 in Figure 3A represents the profile or cross section of the core 60 at the first extremity 11 of the cutting tool 1. The double headed arrow 63.1 illustrates the diameter of the core at this most distal longitudinal position of the cutting tool. The diameter 63.1 corresponds to twice the radius of the circle 60.1.

Reference numeral 50 indicates the deepest point, gulet or low point of the flutes 30, thus that the dotted circle 60.1 touches or passes through said low point 50. In the view of Figs 3A and 3B, reference numeral 90 is the circular outline of a cylinder the surface of which defines said lands 15 of said teeth 14. In the embodiment shown, the outline 90 corresponds to the outline of the cross section of the shaft 1 of the tool. In other embodiments, the diameter of the shaft may be larger diameter or smaller than the cutting diameter.

In the same top down view of Figure 3B, the dotted circle 60.2 is inserted to illustrate the cross section 63.2 of the core 60 of the cutting tool 1 at a longitudinal position just where the first section 21 ends and before it passes to the third section 23 or exit curve 40 as shown in Figs 1A and 1B. For example, the core cross section as shown in Fig. 3B is where the diameter 63.2 of the core of the first section 21 is largest.

As becomes apparent from Figs 3A and 3B, the first section or cut 21 of the cutting tool 1 has a core 60 having a variable diameter. In particular, the core of the cutting tool 1 comprises a conical section and/or is conical, at least in part of said first section 21 of the cutting tool.

Figures 3A and 3B also show distances 64.1 and 64.2, which are the radial distances between the bottom low point or line 50 and the outline 90. As a consequence of the variable core diameter, the distances 64.1 and 64.2 are different.

In the particular embodiment where the core is conical, with increasing core diameter from the first extremity 11 towards the shaft or second extremity 12, the distance 64.1 and 64.2 from a circular outline 90 of the cutting tool or the cut 21 to the said bottom low point or line 50 decreases from said first free end 11 in direction towards said the shaft and/or second extremity 12.

With the present invention, the cutting tool is obtained by pressing, and the variable core diameter can thus be conveniently obtained by providing appropriate molds that define flutes and/or teeth in such a manner that a core with a variable diameter is obtained, preferably a conical core or core section.

In the context of producing cutting tools by pressing a powder in molds as disclosed in the present and the previous application of the applicant, the presence of a conical core further facilitates extraction of the cutting tool from the molds and reduces the occurrence of breakage of cutting tools during extraction. These advantages and features will become apparent from the description herein after.

**Figure 4A** shows an assembly similar to the one shown in Figs 2A-2C. The main difference of the assembly shown in Fig. 4A is that the mold cavity or area 55 defined by the first mold 5 and in particular by the insert 45 of the first mold 5 defines the first section and/or cut 21 of a cutting tool 1 having a variable core diameter in accordance with an embodiment of the invention. Besides, in the assembly of Fig. 4A, the second mold 6 also comprises an insert 44, such that the second mold area and/or cavity 56 of the second mold is defined by part of the inner surface of said insert 4. Since the overall structure and functioning of the assembly in Fig. 4A is very similar and to a large extent identical to the assembly shown in Figs 2A-2C, the same reference numerals are used for describing structural parts. It is noted that Fig. 4A illustrates the situation where the cutting tool 1 has been pressed and is ready for extraction from the molds.

**Figure 4B** is an extract of Fig. 4A showing the first mold 5 and in particular the first mold area 55 of the first mold in greater detail. In this longitudinal section, the ridges 3 defining the spiraled flutes 30 are better visible and appear as inward bulges bulging to the inside of the mold cavity.

The deepest positions or low points 50 of the flutes 30 correspond to the most central points of the ridges 3 when seen in the longitudinal section. A longitudinal straight line 80 can be drawn, which connects successive low point or lines 50.1, 50.2 of said one or more flutes 30. The longitudinal line 80 preferably extends along an outline of said core 60. As becomes apparent, the ridges 3 in the first mold 5 define a conical core 60 of the cutting tool.

The form of the core 60 of the cutting tool 1 is defined by the longitudinal line 80, which connects low points 50.1 and 50.2 appearing successively on one side of the mold cavity in this view.

The longitudinal straight line or longitudinal core line 80 forms angle α with the longitudinal axis 70. It is noted that lines 70 and 80 lie in the same longitudinal plane defining the section of Figs 4A and 4B. In the embodiment shown, the angle α is 1° as indicated in Fig. 4B and is such that straight lines 70 and 80 cross each other somewhere above Fig. 4B.

**Figures 5A** and **5B** illustrate the extraction of the cutting tool following pressing as described with respect to Figs 2A-2C above. Figures 5A and 5B are taken from the Applicant's previous application EP17192714.8, but can also be used to illustrate the extraction of cutting tools in accordance with the present invention.

In Fig. 5A, the second mold 6 has been removed by displacing the second mold axially by a linear movement along axis 70. In particular, the second mold 6 has been vertically lowered. It is noted that the second pressing punch 42 has not moved and has continued to support the cutting tool 1 by abutting to the second extremity 12 of the cutting tool while second mold was axially removed. In this manner, breakage of the cutting tool during removal of a mold and in particular of the second mold is prevented.

In a next step, the second pressing punch 42 is removed, preferably also by axial displacement, e.g. lowering the punch 42 linearly along axis 70.

In Fig. 5B, the second punch 42 has already been removed. In the subsequent step, extraction of the cutting tool from the first mold 5 is accomplished by pushing the tool 1 through the first mold area or cavity 55 by way of said first pressing punch 41, while said pressing punch rotates in accordance with the helical ridges 3 of the mold area 55. As a consequence of said ridges, the cutting tool 1 also rotates while conducting the linear movement along axis 70 so as to be pushed out of the first mold 5 through the first opening 51 of said first mold, as shown in Fig. 5B.

When considered in combination with Figs 3A through 4B, it becomes apparent that the method of the invention preferably comprises extracting said pressed cutting tool 1 from said mold 5 by exerting a pressure along a longitudinal axis 70 of said tool in said mold 5 in a longitudinal direction from a side or extremity 11 where said core diameter is smaller towards where said core diameter is comparatively larger, which correspond to the direction towards the second extremity 12 of the overall tool 1.

**Figures 6A** and **6B** are enlarged extracts G and H of Fig. 4B and are shown here to describe the advantage of the conical core 60 when extracting the tool 1 from the mold. Fig. 6B shows the contact between the surface of the tool 1 and the inside of the mold 5 at a position where the mold is cylindrical. As one can see from Fig 4B, the extract H shows the contact between the land 15 of a tooth of the tool 1 and the inside of the mold 5 defining the land 15. As mentioned above, the lands 15 of said teeth lie in the surface of a cylinder that is coaxial to axis 70. In the longitudinal sections of Figs 4B and 6B, the contact between the tool 1 and the inside surface of the mold 5 appear as a vertical straight line. Accordingly, the tool 1 and the inside surface remain in contact during extraction, as the tool 1 glides along the cylindrical surface during extractions.

In contrast to Fig. 6B, Fig. 6A is an extract G of a skewed contact surface between the tool and the inside of the mold. As soon as an axial pressure is conducted on the pressed tool 1 by punch 41, a gap 95 is created between the outer surface of the tool 1 and the inner surface of the mold area 55, such that the tool 1 is separated from the surface of the mold area.

Thanks to the ridges 3 defining a conical core 60 of the cutting tool, an immediate separation between the tool 1 and the mold 5 at the position of said low points is achieved once the axial pressure is conducted for extracting the tool from the first mold 5. Thanks to the immediate separation of the of the tool and the cavity 1 at defined positions, the extraction is overall facilitated, and the occurrence of breakage of the tool during extraction is reduced.

While certain of the preferred embodiments of the present invention have been described and specifically exemplified above, it is not intended that the invention be limited to such embodiments. Various modifications may be made thereto without departing from the scope and spirit of the present invention, as set forth in the following claims. For example, while the description illustrates the invention by way of an overall mold formed by first and second mold units, the skilled person may easily adapt the process to processes of pressing cutting tools using only one mold, wherein the mold comprises mold areas for several parts of the cutting tool. Furthermore, the skilled person may implement the invention while using more than two partial molds for forming an overall mold.

### Reference numerals:

- 1: Cutting tool a blank tool and/or a precursor cutting tool
- 2: shaft or shank of cutting tool
- 3: ridges of mold defining flutes and grooves of tool
- 4: helix or cutting part of cutting tool.
- 5: first mold
- 6: second mold
- 11: First free end of cutting tool
- 12: second free end of tool
- 14: one tooth or several teeth
- 15: outer surface or land of cut/teeth
- 21: first section comprising cut
- 22: second section comprising
- 23: third or intermediate section
- 30: flutes
- 32: cutting edge
- 33: rake of tooth
- 34: heel of tooth
- 40: exit curve
- 41: first punch
- 42: second punch
- 43: rotating head
- 44: insert of second mold
- 45: insert of first mold
- 50: bottom low point or line, gulet
- 51, 61: first openings of molds
- 52, 62: second openings of the molds
- 55: first mold are or lumen
- 56: second mold area or lumen
- 60: core of the cutting tool in the first section
- 63.1,63.2: core diameter
- 64: radial distance from core to outline 90
- 65: powder
- 70: the longitudinal axis of tool
- 80: longitudinal core line
- 90: circular outline of cutting tool/shaft in cross section
- 95: gap between tool and mold during extraction

## Claims

1. A process for manufacturing a product selected from the group consisting of a cutting tool, a blank cutting tool and a precursor cutting tool (1) by pressing, the process comprising:
- providing at least one mold (5) defining the shape of at least part of said product (1), wherein said mold comprises a mold area and/or cavity (55) comprising ridges (3) designed to define one or more flutes (30) and a core (60) of the product to be produced,
- adding a powder (65) comprising a carbide, ceramic, metal, nitride or cermet powder into said mold (5),
- exerting a pressure on said powder (65), thereby producing said product (1), ***characterized in that*** said core (60) is defined by said mold (5) so as to have a variable core diameter (63.1, 63.2).

2. The process of claim 1, wherein a diameter of said core (60) is variable along a longitudinal axis (70) of said product.

3. The process of claim 1 or claim 2, wherein said core (60) comprises a conical section and/or is conical.

4. The process of any one of the preceding claims, wherein said diameter of said core (60) corresponds to twice the distance of a perpendicular extending radially from a central, longitudinal axis (70) of the product and/or of said mold (5) to a gullet or bottom low point or line (50).

5. The process of any one of the preceding claims, wherein said product (1) comprises:
- a first free end (11) and a second free end (12),
- a first section (21) encompassing said first free end (11), wherein said first section (21) comprises said one or more flutes (30), and,
- a second section (22) encompassing said second free end (12), wherein said second section (22) comprises a shank (40) of the product (1), wherein, when said first section (21) of said product (1) is seen in cross section, a distance from a circular outline (90) of said first section (21) to the said gullet or bottom low point or line (50) decreases from said first free end (11) in direction towards said shank (40).

6. The process of any one of the preceding claims, wherein an angle (α) between the longitudinal axis (70) of said product (1) and/or said mold (5) and a longitudinal straight line (80) defining said core diameter is from 0.05 to 6°, preferably 0.1 to 3°, most preferably from 0.5 to 2°.

7. The process of claim 6, wherein said longitudinal straight line (80) is a line extending in a same longitudinal plane as said longitudinal axis (70).

8. The process of any one of claim 6 and 7, wherein, when said product (1) is seen in a longitudinal section, said longitudinal straight line (80) connects successive gullets and/or low points (50, 50.1, 50.2) of said one or more flutes (30) appearing in said longitudinal section, and/or, with respect to said mold (5), said longitudinal straight line (80) connects successive peaks (50, 50.1, 50.2) of said ridges (3) of said mold (5).

9. The process of any one of the preceding claims, comprising:
- extracting said product (1) from said mold (5) by applying a pressure or force axially on said product in a direction from a first free end (11) towards the shank (2) of said product (1).

10. The process of claim 9, wherein said mold (5) comprises first and second openings (51, 52) in communication with said mold area or cavity (55), the process comprising:
- providing a pressing punch (41), wherein said pressing punch is capable of rotating and/or comprises a rotating head (43), and,
- axially inserting said pressing punch (41) through said second opening (52) of said mold (5) and into said mold area (55) comprising ridges (3) and extracting said product (1) through said first opening (51).

11. The process of any one of the preceding claims, wherein said at least one mold (5) is a first mold (5) and said mold area and/or cavity (55) is a first mold area and/or cavity, and wherein said process comprises:
- providing a second mold (6) comprising a second mold area and/or cavity (56), wherein said second mold area is designed to define a shank (2) of the product to be produced,
- wherein said first mold (5) comprises first and second openings (51, 52), and wherein said second mold (6) comprises first and second openings (61, 62), and
- wherein said process comprises, before adding said powder (65), joining first openings (51, 61) of said first and second molds (5, 6) so as to provide an overall mold for said product (1).

12. A pressed product (1) obtainable by the process of any one of the preceding claims.

13. A pressed product (1) selected from the group consisting of: cutting tool, a blank tool and/or a precursor cutting tool (1), wherein said product (1) comprises a shaft (2) and a cut (21) comprising flutes (30), wherein said flutes define a core (60), **characterized in that** said core (60) has a variable diameter (63.1, 63.2).

14. The pressed product of claim 13, wherein said core (60) is defined by the low point and/or gulet (50) of said flutes (30), and wherein said core comprises a cone and/or a conical section.

15. A mold (5) for producing at least part of a product (1) selected from the group consisting of: cutting tool, a blank tool and/or a precursor cutting tool, wherein said mold (5) comprises ridges (3) designed to define flutes (30) and a core (60) of the tool (1) to be produced, wherein said core (60) has a variable diameter.

16. The mold of claim 15, wherein said core (60) comprises a conical section and/or is conical.

17. The mold of claim 15 or 16, wherein, when said mold is seen in a longitudinal section, a longitudinal core line (80) can be drawn such that said longitudinal core line (80) extends along an outline of said core (60), wherein said longitudinal core line (80) connects successive low point or lines (50) of said one or more flutes (30), and/or, respectively, connects successive peaks (50) of said ridges (3).

18. The process of any one of claims 1-11, the pressed product (1) of any one of claims 12-14 and the mold (5) of any one of claims 15-17, wherein said product (1) is selected from an end mill, a milling cutter, a drill bit, a tap, and a reamer, and from a blank and a precursor of any one of the aforementioned.
